# EUROPEAN PATENT APPLICATION

(11) **EP 4 521 572 A1**
(43) Date of publication of application: **12.03.2025**
(21) Application number: 24199177.7
(22) Date of filing: 09.09.2024
(51) Int. Cl.: H02G 3/32, F16L 3/04, F16L 3/22, F16L 3/23

(54) **CABLE SUPPORT**

(30) Priority: 08.09.2023 US 202363581456 P; 21.11.2023 US 202363601530 P; 15.07.2024 US 202463671359 P
(71) Applicant: Erico International Corporation, Solon, OH 44139 (US)
(72) Inventor: Wilson, Eric J., Solon (US); Le Roux, Adrien, Lyon (FR)
(74) Representative: Barker Brettell LLP

(57) **Abstract**

A cable support (1500) can include base (1502) that includes a cup (1506). The base (1502) can receive a fastener within the cup (1506) to secure the cable support to a building structure in an installed orientation, with the cup (1506) opening away from the building structure. A support arm (1504) can extend integrally from the cup to a distal end (1508). The support arm (1504) can include a support surface, relative to the installed orientation, to support cables relative to the base.

## Description

### CROSS-REFERENCE TO RELATED APPLICATION

This application claims priority to U.S. provisional patent application no. 63/581,456, filed on September 8, 2023, U.S. provisional patent application no. 63/601,530, filed on November 21, 2023, and U.S. provisional patent application no. 63/671,359, filed on July 15, 2024.

### BACKGROUND

In many applications, it may be useful to support a set of cables or wires at a certain height. For example, networks of cables may need to be supported in various arrangements, from a ceiling or a variety of other building structures.

### SUMMARY

Embodiments of the invention can provide cable support, to support cables from ceilings or other structure, and related support systems and methods.

In some examples, a cable support can include a base and a support arm. A cup of the base can extend to open away from a building structure, relative to an installed orientation of the cable support. The base can be configured to receive a fastener within the cup to secure the cable support to the building structure. The support arm can extend integrally from the cup to a distal end that is cantilevered from the cup. The support arm can include a support (e.g., top) surface, facing toward the building structure in the installed orientation, to support cables relative to the base.

In some configurations, the cable support can include a protrusion that extends integrally from the distal end of the support arm to block removal of cables from the support surface of the support arm.

In some configurations, the cup can taper between a first width at an upper end and a second width at a lower end, relative to the installation orientation. The first width can be smaller than the second width. In some examples, the support arm can extend integrally from the lower end of the cup.

In some configurations, the cup can define a conical section.

In some configurations, the support arm can define a support surface that extends obliquely relative to a reference plane that is perpendicular to a central axis of the conical section.

In some configurations, a height of the cup at a first side adjacent to the support arm can be larger than a height of the cup at a second side opposite the support arm.

In some configurations, the support arm can extend integrally from the cup at the first side.

In some configurations, the support surface of the support arm can include a plurality of protrusions that is arranged to space apart adjacent cables supported on the support surface.

In some configurations, heights of the plurality of protrusions above the support surface can decrease from a perspective moving from the base to the distal end of the support arm.

In some configurations, the cup can include a first tab at a first side of the cup, and a second tab at a second side of the cup. The first or second tabs can secure another cup of another cable support in nested engagement with the cup.

In some configurations, a base wall of the base can include a conical profile that extends into the cup and includes an aperture to receive the fastener. The conical profile can be nestable with another conical profile of another cup of another cable support that is in nested engagement with the cup and also secured to the building structure by the fastener (e.g., with the fastener extending through both conical profiles).

In some examples, a cable support assembly can be provided. The cable support assembly can include a first cable support with a first base, a first support arm, and a first cup (e.g., corresponding to the base, support arm, or cup as variously described above) and a second cable support with a second base, a second support arm, and a second cup (e.g., corresponding to the base, support arm, or cup as variously described above). The first and second cable supports can be secured to an overhead or other building structure with the second cup nested within the first cup and the second support arm extending at a different direction than the first support arm (e.g., with the first cup seated against the building structure).

In some configurations, the first and second cable supports can be secured to the building structure with a single fastener extending through the first base and the second base.

In some configurations, tabs can protrude from one or more of the first cup or the second cup to engage the other of the first cup or the second cup to secure the second cup within the first cup.

In some configurations, the first cable support can include an angled tab that extends from a first side of the first base to secure the second cup within the first cup.

In some configurations, the first cable support can include a first hooked tab that extends from a second side of the first base to secure the second cup within the first cup.

In some configurations, the second cable support can include a second hooked tab that extends from the second base and engages with an angled tab that extends from the first cup of the first cable support to secure the second cup within the first cup.

In some examples, a cable support assembly can include a first cable support and a second cable support. The first cable support can include a first base and a first support arm. The first base can include a first cup that opens away from a building structure (e.g., downwardly) relative to an installed orientation of the first cable support. The first support arm can extend integrally from the first base and can include a first support (e.g., top) surface to support cables relative to the first base. The second cable support can include a second base and a second support arm. The second base can include a second cup that opens away from the building structure (e.g., downwardly) relative to an installed orientation of the second cable support. The second support arm can extend integrally from the second base and can include a second support surface to support cables relative to the second base. The first and second cable supports can be secured to an overhead structure or other building structure with the second cup nested within the first cup and the second support arm extending at a different direction than the first support arm.

In some examples, a method is provided for securing cables to a building structure (e.g., an overhead structure). A first base of a first cable support can be aligned with the building structure, with a first cup of the first base extending to open away from the building structure. A fastener can be extended through the first base within the first cup to secure the first cable support to the building structure with a first support arm extending integrally from the first cup along the building structure. With the first cup secured to the building structure, a first set of cables can be inserted between the building structure and the first support arm to be supported on a first top support surface of the first support arm.

In some implementations, before extending the fastener through the first base, a second cup of a second cable support can be nested within the first cup to secure the second cup to the first cup, for collective attachment to the building structure. With the first and second cable supports secured to the building structure by the fastener, a second set of the cables can be inserted between the building structure and a second support arm that extends integrally from the second cup, so that the second set of the cables are supported on a second support surface of the second support arm.

Features which are described in the context of separate aspects and/or embodiments of the invention may be used together and/or be interchangeable wherever possible. Similarly, where features are, for brevity, described in the context of a single embodiment, those features may also be provided separately or in any suitable sub- combination. Features described in connection with the cable support, cable support assembly and/or method may have corresponding features definable and/or combinable with respect to each other, and these embodiments are specifically envisaged.

### BRIEF DESCRIPTION OF THE DRAWINGS

The accompanying drawings, which are incorporated in and form a part of this specification, illustrate embodiments of the present disclosure and, together with the description, serve to explain the principles of embodiments of the disclosure:
FIG. 1 is an axonometric view of a cable support according to an embodiment of the disclosure;
FIG. 2 is a top view of the cable support of FIG. 1;
FIG. 3 is an axonometric view of a cable support according to another embodiment of the disclosure;
FIG. 4 is a top view of the cable support of FIG. 3;
FIG. 5 is an axonometric view of a cable support according to another embodiment of the disclosure, the cable support including a gate in an open orientation;
FIG. 6 is a top view of the cable support of FIG. 5;
FIG. 7 is a side elevation view of the cable support of FIG. 5 with the gate in an open orientation;
FIG. 8 is a side elevation view of the cable support of FIG. 5 in with the gate in a closed orientation;
FIG. 9 is an axonometric view of a cable support according to another embodiment of the disclosure, the cable support including a gate in an open orientation;
FIG. 10 is a top view of the cable support of FIG. 9;
FIG. 11 is a side elevation view of the cable support of FIG. 9 with the gate in an open orientation;
FIG. 12A is a side elevation view of the cable support of FIG. 9 with the gate in a closed orientation;
FIG. 12B is an axonometric partial view of the gate of FIG. 9 in a closed orientation;
FIG. 13 is a side elevation view of a cable support assembly installed to a structure, with a first support arm and a second support arm extending in opposite directions;
FIG. 14 is a bottom view of the cable support assembly of FIG. 13;
FIG. 15 is a bottom view of a cable support assembly installed to a structure, with a first support arm and a second support arm extending in different directions;
FIG. 16 is an axonometric view of a cable support according to another embodiment of the disclosure;
FIG. 17 is a top view of the cable support of FIG. 16;
FIG. 18 is a side elevation view of the cable support of FIG. 16;
FIG. 19A is an axonometric partial view of an alternate configuration of a distal end of the support arm of FIG. 16, according to an embodiment of the disclosure;
FIG. 19B is an axonometric partial view of another alternate configuration of a distal end of the support arm of FIG. 16, according to an embodiment of the disclosure;
FIG. 20 is an axonometric view of a cable support assembly that includes the cable support of FIG. 16, with a first support arm and a second support arm extending in opposite directions and a fastener insert installed;
FIG. 21 is an axonometric cross-sectional partial view of a first cup and a second cup of the cable support assembly of FIG. 20;
FIG. 22 is an axonometric view of a cable support assembly that includes the cable support of FIG. 16, with a first support arm and a second support arm extending in perpendicular directions;
FIG. 23 is an axonometric view of a cable support according to another embodiment of the disclosure;
FIG. 24 is a top view of the cable support of FIG. 23;
FIG. 25 is a side elevation view of the cable support of FIG. 23;
FIG. 26 is an axonometric partial view of a cup of the cable support of FIG. 23;
FIG. 27 is an axonometric view of a cable support assembly that includes the cable support of FIG. 23, with a first support arm and a second support arm extending in perpendicular directions;
FIG. 28 is an axonometric partial view of a first cup and a second cup of the cable support assembly of FIG. 27;
FIG. 29 is a vertical cross-sectional partial view of the first cup and the second cup of FIG. 28, with a fastener insert installed;
FIG. 30 is an axonometric partial view of a cup of a cable support according to another embodiment of the disclosure;
FIG. 31 is an axonometric partial view of a first cup and a second cup of a cable support assembly that includes the cable support of FIG. 30;
FIG. 32 is an axonometric cross-sectional partial view of the first cup and the second cup of FIG. 31;
FIG. 33 is an isometric view of a cable support according to another embodiment of the disclosure;
FIG. 34 is an isometric view of a cable support assembly that includes the cable support of FIG. 33;
FIGS. 35A and 35B are axonometric and vertical cross-sectional partial views of the cable support assembly of FIG. 34; and
FIG. 36 is an axonometric view of a cable support according to another embodiment of the disclosure.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items.

The following discussion is presented to enable a person skilled in the art to make and use embodiments of the invention. Various modifications to the illustrated embodiments will be readily apparent to those skilled in the art, and the generic principles herein can be applied to other embodiments and applications without departing from embodiments of the invention. Thus, embodiments of the invention are not intended to be limited to embodiments shown but are to be accorded the widest scope consistent with the principles and features disclosed herein. The following detailed description is to be read with reference to the figures, in which like elements in different figures have like reference numerals. The figures, which are not necessarily to scale, depict selected embodiments and are not intended to limit the scope of embodiments of the invention. Skilled artisans will recognize the examples provided herein have many useful alternatives and fall within the scope of embodiments of the invention.

As noted above, non-continuous (e.g., non-tray) cable supports can be used to hang cables from a variety of building structures including a ceiling or other overhead structure. Depending on the application, some supports may use various types of fasteners to secure the supports to the desired structure.

Conventional cable supports are generally designed in a clip configuration that secures a flexible support arm to a ceiling or other structures. The conventional supports are often installed every 0.5 to 1 meter using fasteners including an anchor, screw, and a shot-fired pin. After the conventional supports are installed, the support arms can be elastically bent to provide clearance to receive a set of cables on a top surface of the support arm. Thus, an installer may be required to hold down the support arm (e.g., or flex the support arm downward) while inserting the cables onto the top surface. Considering the conventional supports may be installed overhead at an elevated height, this requirement may increase complexity and decrease convenience of installation procedures. Additionally, conventional supports are generally made with plastic, which may not be suitable for high temperature environments.

Embodiments of the disclosed technology can provide improvements over conventional supports for cables, including by allowing the use of metal components rather than plastic. For example, steel tends to have a higher strength per weight or area than plastic and better high-temperature performance. Under the disclosed designs, an optimized stamping process and optimized amounts of material can be used, allowing metallic cable supports to be manufactured at a competitive cost as compared to plastic supports.

In some examples, supports according to the disclosed technology can be installed on overhead (e.g., ceiling) structures so that a support surface of a support for supporting cables and a mounting surface of the support for seating on the support structure can be top surfaces, relative to gravity. In other examples, however, supports according to the disclosed technology can be installed on differently oriented structures (e.g., vertical or other walls, support columns, etc.). In such cases, a support surface or a mounting surface of the support may not necessarily be a top surface, relative to gravity. For convenience, discussion of some examples herein may focus on overhead-mounted configurations, but these examples (and others) can generally also be secured in other configurations, unless otherwise expressly noted. Accordingly, in presentation of examples, discussion of "top" or other similarly designated features should be understood to apply relative to the illustrated or discussed example installation, rather than to limit the applicable contexts of the example, unless otherwise expressly noted.

In some examples, during installation, a base of a metallic cable support can serve as a mounting structure, to be attached to a magnetic nozzle of a direct fastening gun or other tool. For example, the base can form a (mostly) closed end of a cup that opens downwardly to receive and center the nozzle (e.g., with a preloaded fastener extending from the nozzle within the cup and through a fastener hole in the base). Thus, an installer can quickly and safely prepare the cable support to be fastened before reaching a high ceiling. Alternatively, the installer can complete the installation from the ground by placing the direct fastening gun on a pole, removing the need to climb a ladder or use a lift. Or, in some examples, a cable support can be otherwise secured to a support structure (e.g., using fasteners other than nails, with corresponding manual or powered tools)

In some embodiments, the cup can taper in the downward direction from the base, relative to an installed orientation, with an increasing diameter at increased distance from the base (i.e., the cup can widen from a perspective moving away from a structure to which the cup is attached). In some examples, the wall of the cup can also have varying heights relative to the base (in the installed orientation), including with a larger height adjacent to a support arm that extends from the base. In some cases, these features, implemented alone or in combination, can allow several cups to be stacked together in a single installation and thus can allow multiple support arms to be installed together on site (e.g., with a single fastener). In some examples, the stacked cups can be arranged with various angles between each respective arm (e.g., in opposed directions, or at arbitrary angles). This flexibility of arrangement can be useful, for example, in a jobsite where sets of cables run in different directions.

In some embodiments, cable supports can include various indexing and securement features for nested multi-support configurations. For example, a cup of a cable support can include a plurality of tabs (e.g., hooked tabs or angled tabs) that engage with a corresponding window or other feature provided on a different cable support. Thus, multiple cable supports can be secured to one another at one or more points of engagement. In some examples, the indexing or securement features can provide an alignment of multiple cable supports in one or more of rotational, lateral, or vertical directions.

In some embodiments, a mounting surface of a base can extend at an angle relative to a support arm, or *vice versa,* so that the support arm angles toward the overhead structure. Thus, when cables are placed on a top surface of the support arm, the cables may be naturally held against accidental removal.

Relatedly, the top surface of a support arm can be provided with protrusions that are arranged to space apart adjacent cables on the top surface. The protrusions can also provide structural strength to the cable support, allowing for manufacturing with thinner material. Generally, the protrusions can have the same height or varying heights or can taper in width along the length of the arm.

In some examples, sides of a support arm can have flanges that extend at an angle (e.g., at an extended bend) away from the top surface. This arrangement can increase the structural integrity of the cable support to carry the cable loads. Further, the flanges can extend from a bend that has a radius of curvature that provides protection to the cables from any sharp edges.

In some embodiments, a support arm can be provided with a gate extending integrally from its distal end. The gate can be configured to bend (elastically or plastically) between closed and open orientations to retain cables or allow installation of cables, respectively. In some examples, side flanges can have V-shaped notches that define a gate at a distal end of the support arm, so that the gate can be bent downward for insertion of a set of cables. Alternatively (or additionally), in some examples, the gate can include a T-shaped or other bendable tab, which can be bent toward the overhead structure to a closed orientation to retain cables (as needed). In yet some embodiments, the gate can include a protrusion that can aid in retaining cables or allowing installation of cables as the gate bends between closed and open orientations.

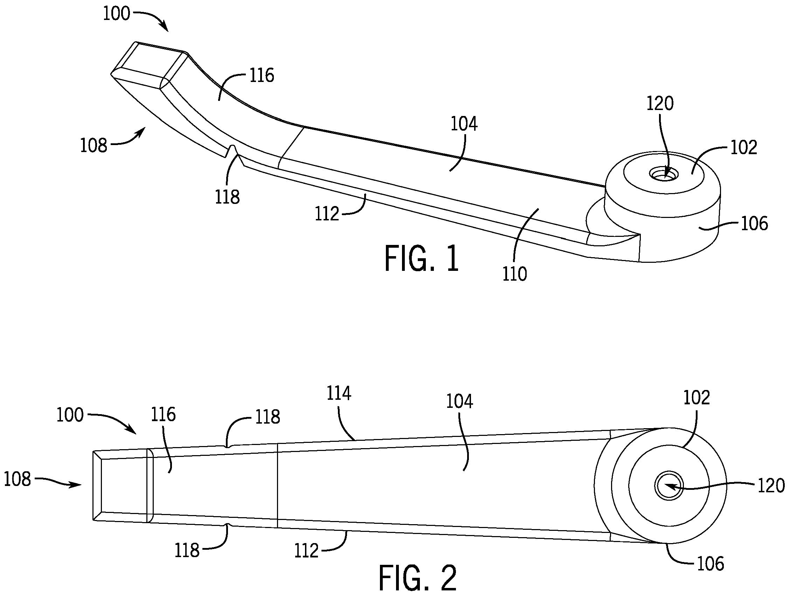

FIGS. 1 and 2 depict one embodiment of a cable support according to aspects of the disclosed technology, which is generally configured to hold a plurality of cables (not shown) or other objects. Structures discussed below relative to securing a cable support 100 to building structures can be implemented on a variety of other known types of supports for a variety of supported objects. As will be discussed in further detail below, the cable support 100 is configured so that it can be mounted to (e.g., installed on) different structures and in different orientations, including secured to an overhead structure, wall, deck, or a ceiling.

The cable support 100 includes a base 102 and a support arm 104, which are integrally formed from a sheet of metal that can be stamped (or otherwise fabricated) to form the cable support 100. The base 102 can include a cup 106 (e.g., generally circular cup) that opens downwardly relative to an installed orientation of the cable support 100 to receive a fastener (e.g., to secure the cable support 100 to a building structure). In this example, the cup 106 has a cylindrical shape, although other configurations are possible (e.g., conical shapes or more complex curvatures). The support arm 104 can extend integrally from the cup 106 to a distal end 108 (i.e., in a cantilevered arrangement, relative to the cup 106), defining a top surface 110 (relative to the installed orientation) that is configured to support cables relative to the base 102. In the present example, the support arm 104 decreases in width along an elongated direction of the support arm 104. However, the support arm 104 can have a uniform width or other varying widths (e.g., a curved rather than an angular taper) in other examples. Further, although the support arm 104 is shown extending from a lip of the cup 106, opposite a base wall of the cup that receives a fastener (e.g., as further described below), other arrangements are possible.

The support arm 104 as illustrated also curves (or otherwise angles) upwardly from a connection to the base 102 toward the distal end 108. Thus, when the cup 106 is secured to a ceiling structure, the support arm 104 can exhibit an upward curve from a perspective moving away from the cup 106. The support arm 104 can thereby help to retain cables on the top surface 110 both through the blocking effect of the upwardly extending distal end 108 (and gate, as also discussed below) and through redirection of gravitational forces on the cables into a partial force toward the base 102.

In the illustrated example, the support arm 104 includes side flanges 112, 114 that extend at an angle away from the top surface 110 of the support arm 104. The side flanges 112, 114 can extend from a bend that has a radius of curvature that can advantageously provide protection to the cables from any sharp edges. Further the side flanges 112, 114 can increase overall strength or stiffness of the support arm 104, as can allow for the use of relatively thin material.

The cable support 100 can also include a gate 116 that extends integrally from the distal end 108 of the support arm 104. In some examples, the gate 116 can extend upwardly relative to the installed orientation. The gate 116 can include an outer face that is configured to contact a support surface when the cable support 100 is installed. While the illustrated example includes a flat outer face, an outer face of a gate can be curved in different examples. Further, the side flanges 112, 114 of the support arm 104 can include notches 118 that define a gate 116. Accordingly, the gate 116 can flex vertically or sideways about the notches 118 while maintaining an overall shape of the side flanges 112, 114. In the present example, the notches are V-shaped. However, other shapes or curvatures may be used to define the gate 116, both relative to overall profile and relative to bendability with respect to the top surface 110 of the support arm 104.

Generally, with the cable support 100 secured to the ceiling through the base 102, the gate 116 can bend about the notches 118 between an open orientation and a closed orientation. In the open orientation, the gate 116 can be configured to receive cables onto the top surface 110 of the support arm 104, to be supported between the top surface 110 and the ceiling (not shown in FIGS. 1 and 2). In the closed orientation, the gate 116 can be configured to secure cables from removal from the top surface 110 of the support arm 104, by providing a relatively small clearance between the distal end of the gate 116 and the ceiling (not shown in FIGS. 1 and 2).

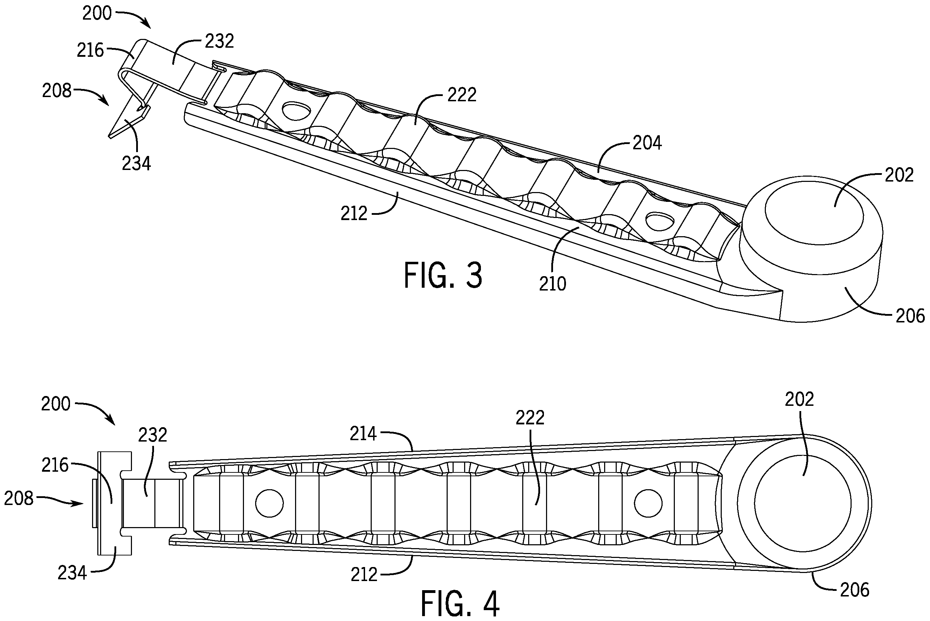

In some embodiments, cable supports can include features that are configured to retain a securing member (e.g., a fastener). As shown in the present example, the base 102 of the cable support includes a centrally located hole 120, such as a through-hole or a tapped hole, to receive the fastener (not shown). In some cases, an extruded lip or other similar feature can be formed at or around the hole 120, including as can help to locate or secure a direct-fastening tool. As will be further discussed below, the cable support 100 can be secured to a building structure by extending a relevant fastener through the hole 120, by use of screw, anchor, or direct fastening (e.g., shot-fired nail). In some cases, insertion of the fastener can form the hole 120 (e.g., due to a shot-fired nail perforating the steel). In other words, no hole may be present in the base 102 (e.g., as shown in a base 202 of FIG. 3) until a direct fastening nail is shot through the solid base 102 into the building structure. In other examples, a larger hole may be included to accommodate a larger securing member for a threaded anchor or other larger fastener. In some cases, one or more of the side flanges 112, 114 or the base 102 can include apertures to receive fasteners (e.g., a cable tie, string, wire, etc.) to secure the cables to the cable support 100.

Thus, the cable support 100 can provide an improved support for securing cables to ceilings or other structures. Other example cable supports are further discussed below. Unless otherwise noted or indicated by a structural difference between the various cable supports, the discussion above generally applies equally to corresponding components and functionality of the cable supports presented below, including with regard to methods of installation.

Continuing, FIGS. 3 and 4 illustrate an embodiment of a cable support 200 that has generally similar features as the cable support 100 (e.g., with various substantially identical features, relative to corresponding features of the cable support 400), with like numerals referring to like features. In some aspects, however, the cable supports 100, 200 differ. For example, the cable support 200 can include a differently configured gate 216 that extends from a support arm 204 at a distal end 208. Generally, the gate 216 is configured as a tab extension of the support arm 204 that can be bent plastically (or otherwise) between open and installed orientations. In the present example, the gate is 216 is T-shaped, although other shapes or configurations are possible.

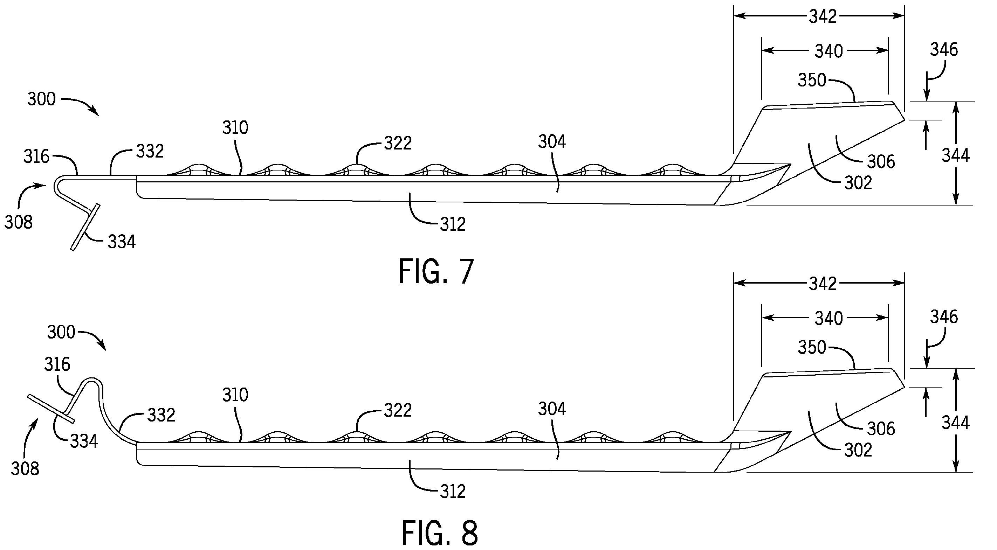

In particular, the gate 216 can include a stem 232 that integrally extends from a top surface 210 of the support arm 204. The gate 216 can further include a leg 234 that extend obliquely from the stem 232, pointing downward in the open orientation (as shown in FIG. 3). The stem 232 of the gate 216 provides an area that is more flexible for permanent deformation, such that manually applied pressure on the leg 234 can initiate the bending of the gate 216 toward the overhead structure (e.g., a support surface) and into the installed orientation (not shown for the gate 216, but see FIGS. 7 and 8). In some examples, the leg 234 can be configured to provide a contact point (e.g., edge or surface) for easy engagement for closing from the ground. Alternate designs with varying parameters (e.g., width, thickness) or additional shapes (e.g., hook) are also possible, including to make closing easier.

In the illustrated example, the top surface 210 of the support arm 204 includes a plurality of protrusions 222 arranged to space apart adjacent cables supported on the top surface 210. For example, the protrusions 222 can form a smooth continuous curvature to support the cables. In some examples, the spacing between the protrusions 222 can be associated with conventional cable sizes or other desired dimensions. Relatedly, the protrusions 222 may provide some strength to the support arm 204, allowing for thinner-gauge material to be used. Also as illustrated, the protrusions 222 of the present example have a uniform width, height, and thickness, as shown in FIG. 4 in particular. Thus, a clearance between the protrusions 222 and the side flanges 212, 214 may increase along the support arm 204. In some embodiments, however, the protrusions 222 can extend fully to the lateral sides of the top surface 210, reaching the bends from which the side flanges 212, 214 extend.

In some embodiments, heights of the protrusions 222 above the top surface 210 can decrease along the support arm 204 from a perspective moving from the base 202 or a cup 206 to the distal end 208 of the support arm 204. Such a variation in height can provide more clearance relative to the installed structure toward the distal end 208 of the support arm 204 and thus help to avoid scraping the cables against the overhead structure during installation. In some examples, the support arm 204 can extend at an upward angle relative to the overhead structure when installed. Thus, the variation in height of the protrusions 222 can provide a uniform clearance between the overhead structure and the top surface 210 in the installed configuration.

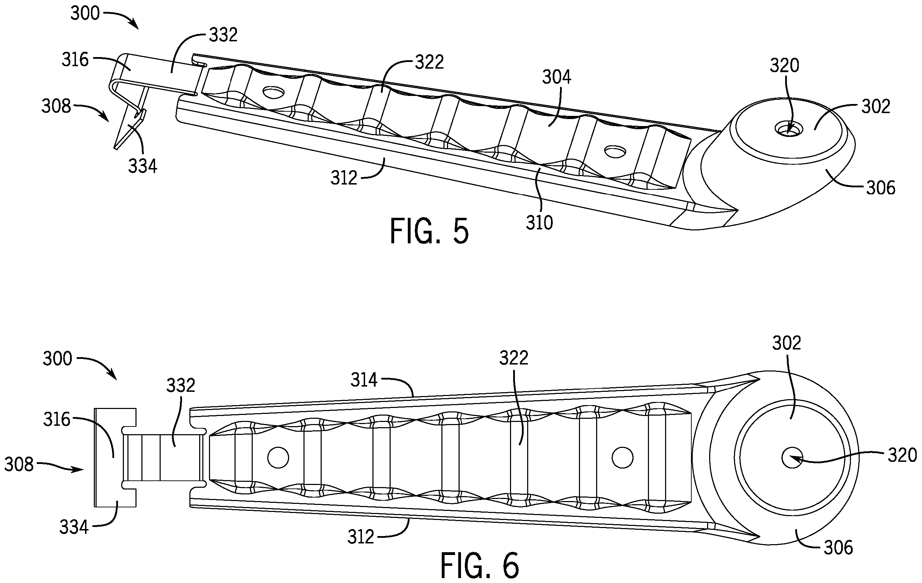

Turning to FIGS. 5-8, a cable support 300 is similar to the cable support 200 (e.g., with various substantially identical features, relative to corresponding features of the cable support 400), with like numerals referring to like features. The cable support 300 includes a base 302 and a support arm 304 that includes side flanges 312, 314 on opposite sides. A T-shaped gate 316 can be provided at a distal end 308 of the support arm 304, and a fastener hole 320 through the base 302. The gate 316 can include a stem 332 that extends from a top surface 310 of the support arm 304 and a leg 334 extending from the stem 332. The gate 316 can also be bent (e.g., plastically) between an open orientation (see e.g., FIG. 7) and a closed orientation (see e.g., FIG. 8). A plurality of protrusions 322 can be provided to support cables.

In some aspects, however, the cable supports 200, 300 differ. For example, the base 302 has a cup 306 with a non-cylindrical shape. In particular, the walls of the cup 306 define a conical section that includes a partial frustum. As illustrated in FIGS. 7-8, the cup 306 can taper between a first width 340 at an upper end (e.g., at the interface with the installed surface) and a second larger width 342 at a lower end, relative to the installed orientation. Further, a height 344 of the cup at a first side adjacent to the support arm 304 can be larger than a height 346 of the cup at a second side opposite the support arm 304. In some examples, the height 346 can be a material thickness of the cable support 300. In some configurations, the walls of the cup 306 can be defined by a conical section that includes either a partial of a full frustrum.

As best illustrated in FIGS. 7 and 8, a mounting surface 350 of the cup 306 may be sloped inwardly toward the support arm 304 when the top surface 310 of the support arm 304 is level. Correspondingly, when the mounting surface 350 is secured flushly against a flat overhead structure, the support arm 304 may angle from the base 302 upwardly toward the distal end 308. Accordingly, when cables are inserted, the angled configuration of the support arm 304 can urge the cables toward the base 302 rather than toward the distal end 308 of the support arm 304, and thereby permitting the cables to be better retained on the support arm 304. In some cases, such an upward angle may also help to apply retention pressure on the cables to help them maintain position on the support arm 304 (e.g., installed position).

As will be discussed in further detail in later examples below, the combination of the taper and the sloped rim of the cup 306 can allow multiple cups to be stacked together in a single installed support system. Advantageously, this geometry can allow the installer to easily and adaptably create two-arm or other multi-arm cable supports on-site.

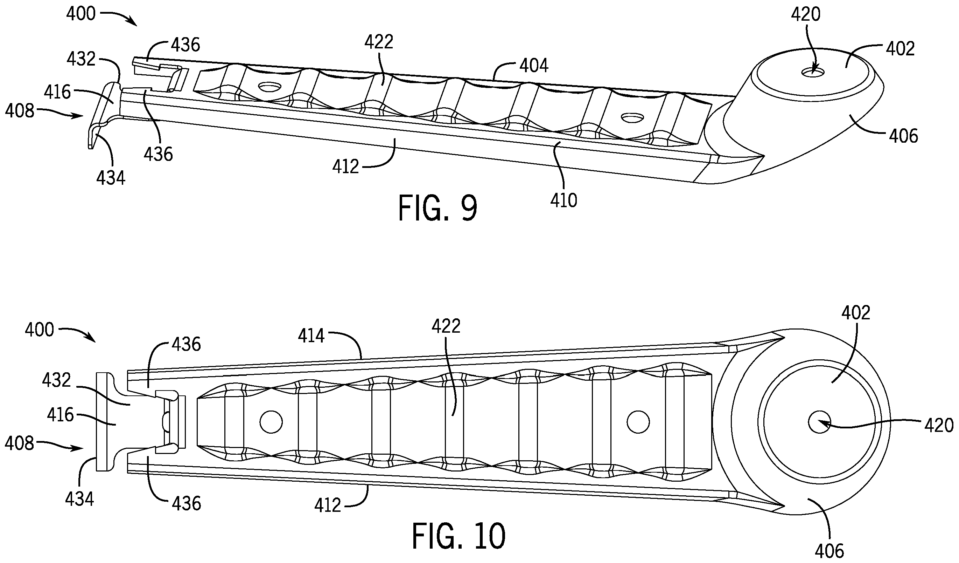

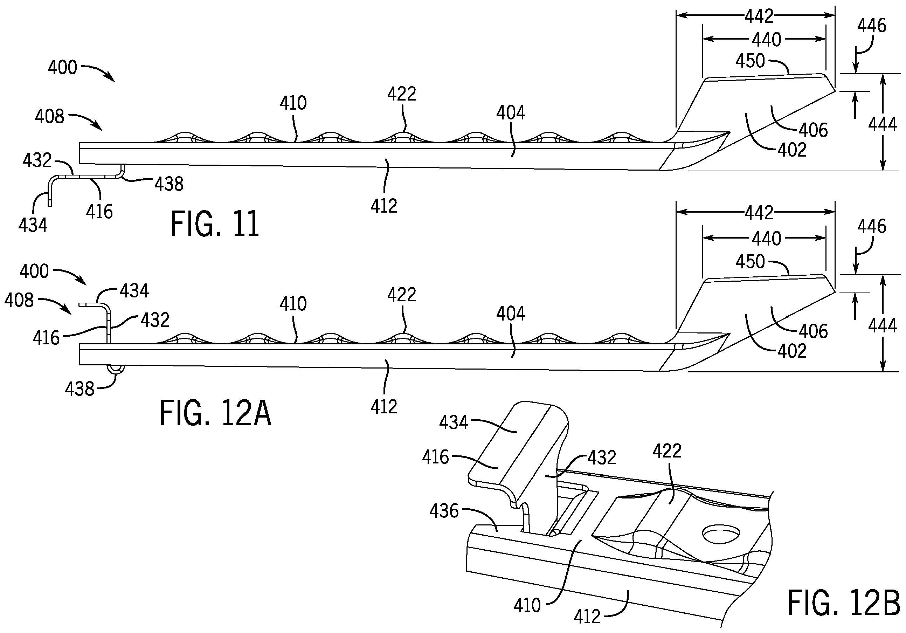

In FIGS. 9-12B, a cable support 400 according to another embodiment is shown. The cable support 400 is similar to the cable support 300 (e.g., with various substantially identical features, relative to corresponding features of the cable support 400), with like numerals generally referring to like features. For example, the cable support 400 includes a base 402 that includes a cup 406, a support arm 404, a fastener hole 420 through a base wall of the base 402 (and of the cup 406), and a plurality of protrusions 422 for supporting cables. As illustrated in FIGS. 11 and 12A, the cup 406 can taper between a first width 440 at an upper end (e.g., at the interface with the installed surface) and a second larger width 442 at a lower end, relative to the installed orientation. Further, a height 444 of the cup at a first side adjacent to the support arm 404 can be larger than a height 446 of the cup at a second side opposite the support arm 404.

However, the cable supports 300, 400 differ in some regards, including with regard to gate configurations. In particular, the support arm 404 can include one or more retention tabs 436 (e.g., arrow shaped retainers) arranged to secure a gate 416 in a closed orientation (e.g., to secure cable on a top surface 410 of the support arm 404). In the illustrated example, the one or more retention tabs 436 include angled tabs extending transverse to an elongate direction of the support arm 404 at the distal end 408 of the support arm 404. In other examples, other tabs or protrusions on the support arm 404 can be similarly used to secure the gate 416.

The gate 416 can be T-shaped and include a stem 432 that integrally extends from the top surface 410 of the support arm 404. The stem 432 can be bent at a first angle away from the top surface 410 then further bent at a return angle, to define a hinge bend 438 (e.g., see FIG. 12A). The stem 432 further includes a leg 434 that extends from the stem 432 at a third angle. The leg 434 can be configured to receive thumb pressure to initiate the bending of the gate 416, or be otherwise similarly engaged (e.g., with a tool from the ground).

In an open orientation (see e.g., FIG. 11), the gate 416 extends below the top surface 410 of the support arm 404 and cables can thus be easily inserted to be supported on the top surface 410. As the gate 416 is bent closed to a closed orientation (see e.g., FIG. 12A-B), the gate 416 rotates upward about the hinge bend 438, then can snap (or otherwise move) past the retention tabs 436. Through elastic deformation of support arm flanges 412, 414, the retention tabs 436 can elastically flex outward to allow the stem 432 of the gate 416 or the gate 416 to enter. As the stem 432 of the gate 416 passes by the retention tabs 436 and into a relief, the retention tabs 436 or the gate 416 can return to the normal position, blocking the T-shaped gate 416 from re-opening (e.g., without sufficient external force). In some cases, the retention tabs 436 can flex outward (e.g., manually) to permit the gate 416 to move from the closed configuration to the open configuration.

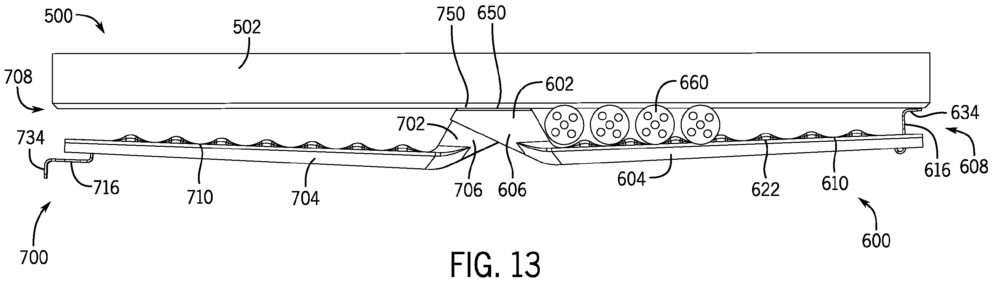

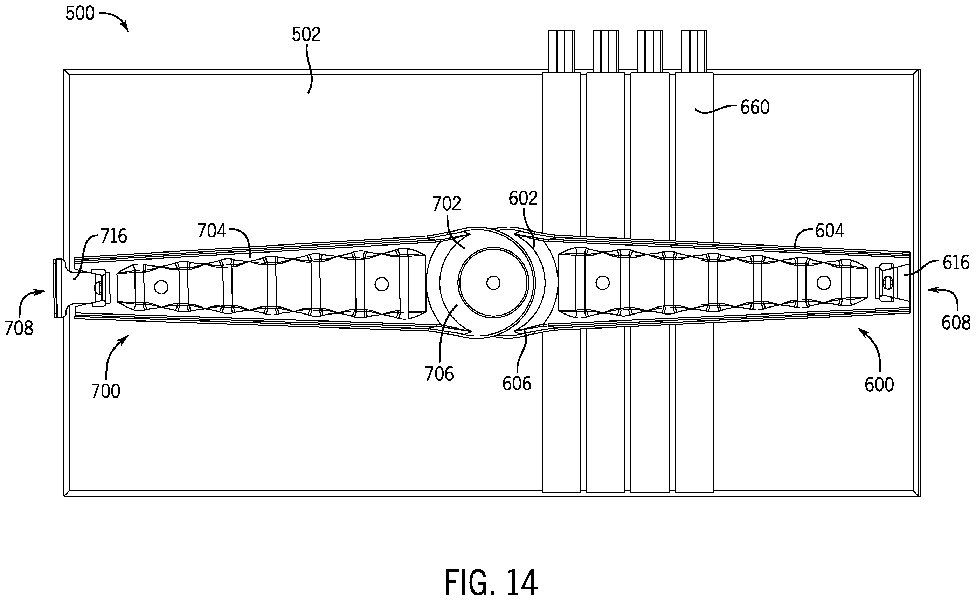

Turning to FIGS. 13-15, a cable support assembly 500 is shown. The cable support assembly 500 includes a first cable support 600 and a second cable support 700. The first and second cable supports 600, 700 are each similar to the cable support 400 (e.g., with various substantially identical features, relative to corresponding features of the cable support 400), with like numerals generally referring to like features. For example, the first cable support 600 includes a first base 602 and a first support arm 604. The first base 602 includes a first cup 606 that opens downwardly relative to an installed orientation of the first cable support 600. The first support arm 604 extends integrally from the first base 602 and includes a first top surface 610 to support cables relative to the first base 602. Similarly, the second cable support 700 includes a second base 702 and a second support arm 704. The second base 702 includes a second cup 706 that opens downwardly relative to an installed orientation of the second cable support 700. The second support arm 704 extends integrally from the second base 702 and includes a second top surface 710 to support cables relative to the second base 702.

In the cable support assembly 500, the first and second cable supports 600, 700 are secured to an overhead structure 502 with the second cup 706 nested within the first cup 606. In some cases, the second support arm 704 can extend in a different direction than the first support arm 604. Further, the first and second cable supports 600, 700 can be secured to the overhead structure 502 with a fastener that extends through a respective end of each of the first and second cups 606, 706. In some embodiments, the first and second cups 606, 706 can include pre-formed apertures to receive the fastener, as similarly discussed above. In some embodiments, the first and second cups 606, 706 can be secured to each other via other methods of joining, such as adhesives.

Additionally, in some embodiments, the first and second cups 606, 706 can be configured to receive and center a magnetic nozzle from a direct fastening gun (e.g., nail gun). Before lifting the fastening gun to the overhead structure 502 for fastening, an installer can quickly and easily attach the fastening gun to the cable support assembly 500 at the relevant cup 606, 706. In some cases, the fastening gun can be placed on a pole so that the installer can install the cable support assembly 500 on a high ceiling from a ground level. Hence, using the magnetic nozzle in combination with the first and second cable supports 600, 700 can improve a speed of the installation and may reduce the need to use lifts and ladders. Further, the installer can arrange one or more of the first and second cable supports 600, 700 on the nail gun nozzle to lift the first or the second cable supports 600, 700 into place for installation.

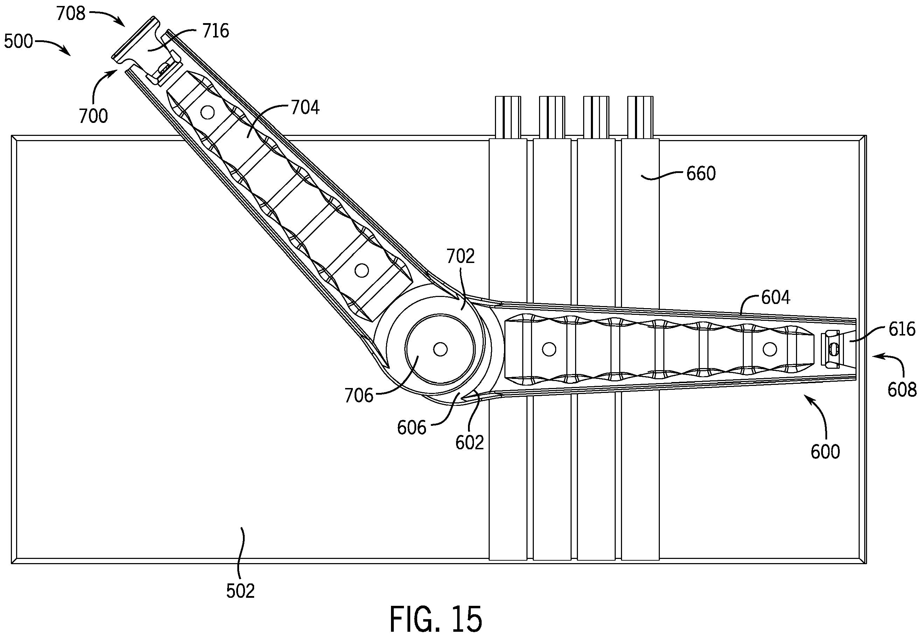

Generally, the second cable support 700 can be rotated to any variety of angles relative to the first cable support 600 (e.g., to adjust an arrangement of the cable supports). In some examples, the second support arm 704 can extend in an opposite direction than the first support arm 604 (see e.g., FIGS. 13-14). Alternatively, the second support arm 704 of a cable support assembly does not extend in the opposite direction than the first support arm 604 (see e.g., FIG. 15). In some cases, the second support arm 704 can extend in the same direction as the first support arm 604, for example, to arrange a set of cables below a different set of cables. Generally, securing the first and second cable supports 600, 700 to a ceiling structure may prevent further rotation, although some adjustable arrangements may be possible.

In some implementations, devices or systems disclosed herein can be utilized, manufactured, installed, etc. using methods embodying aspects of the disclosed technology. Correspondingly, any description herein of particular features, capabilities, or intended purposes of a device or system should be considered to disclose, as examples of the disclosed technology a method of using such devices for the intended purposes, a method of otherwise implementing such capabilities, a method of manufacturing relevant components of such a device or system (or the device or system as a whole), and a method of installing disclosed (or otherwise known) components to support such purposes or capabilities. Similarly, unless otherwise indicated or limited, discussion herein of any method of manufacturing or using for a particular device or system, including installing the device or system, should be understood to disclose, as examples of the disclosed technology, the utilized features and implemented capabilities of such device or system.

In this regard, for example, with reference still to FIGS. 13-15, a method of securing cables to a ceiling structure can include aligning the first cup 606 with the overhead structure 502. A fastener can be extended through the end of the first cup 606 to secure the first cup to the overhead structure with the first cable support in an installed orientation. With the first cup 606 secured to the overhead structure 502, a first set of cables 660 can be inserted between the overhead structure 502 and the first support arm 604. Extending integrally from the first cup 606, the first support arm 604 can support the first set of cables 660 on the first top surface 610 of the first support arm 604, for example, between a plurality of protrusions 622.

With the first set of cables 660 supported on the first support arm 604, the method can further include bending a first gate 616 that extends integrally from a distal end 608 of the first support arm 604, from an open orientation to an installed orientation. Thus oriented near the overhead structure, a first leg 634 of the first gate 616 can prevent the first set of cables 660 from being displaced from the first support arm 604.

Under some implementations, the second support arm 704 can support a second set of cables (not shown but similar to the first set of cables 660) in a similar fashion as the first support arm 604. With the second cable support 700 secured to the overhead structure 502, the second set of cables can be inserted between the overhead structure 502 and the second support arm 704. Extending integrally from the second cup 706, the second support arm 704 can support the second set of cables on the second top surface 710 of the second support arm 704. If desired, a second gate 716 can then be closed (e.g., by bending a second leg 734 or the second gate 716) to prevent the second set of cables from being displaced from the second support arm 704.

In some examples, the first and second cups 606, 706 can be installed simultaneously. For example, a single fastener gun can be used to drive a nail through both of the first and second cups 606, 706 to secure the first and second cups 606, 706 together to a ceiling or other structure. In some examples, separate fasteners can be used, and the first and second cups 606, 706 can be installed sequentially.

As similarly discussed above, the first and second mounting surfaces 650, 750 can extend at an angle. Thus, as installed, the first and second support arms 604, 704 can angle upward toward the overhead structure 502. This oblique configuration can provide a better hold and gravitational bias for inserted cables toward the first and second bases 602, 702 rather than the distal ends 608, 708 of the first and second support arms 604, 704.

In some configurations, the cable support assembly 500 can include more than two cable supports 600, 700 in some examples. For example, like the first and the second cable supports 600, 700, a third cable support can include a third base and a third support arm. The third base can include a third cup that opens downwardly relative to an installed orientation of the third cable support. Further, the third support arm can extend integrally from the third base and include a third top surface to support cables relative to the third base. In such a cable support assembly, for example, the third cable support can be secured to the overhead structure 502 with the third cup (not shown) nested within the second cup 706 and the third arm extending at a different direction than the first and second support arms 604, 704. Correspondingly, the third cable support can be added to an already-installed cable support assembly (e.g., initially installed as in FIG. 15) or the first, second, and third cable supports can be installed with one fastener.

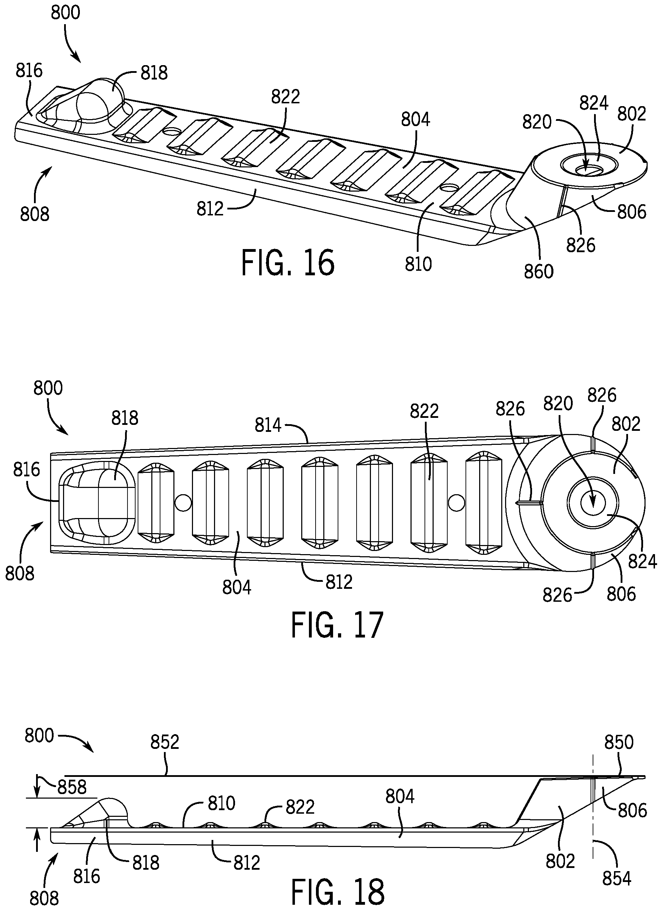

The above (or a similar) method of securing cables to a ceiling structure can be achieved with other configurations of a cable support. Thus, the operations discussed above should be understood to also be applicable to installation of the various other example cable supports disclosed herein, including those presented in FIGS. 16-36, with various mechanical variations as appropriate (e.g., in view of differences between tabs to secure cups together, between indexing features that may or may not be included, between shapes or sizes of support arms, etc.).

In particular, FIGS. 16-22B illustrate a cable support 800 that is similar to the cable support 400 (e.g., with various substantially identical features, relative to corresponding features of the cable support 400), with like numerals referring to like features. For example, in addition to various features discussed below, the cable support 800 includes support flanges 812, 814, support protrusions 822, etc. similar to the cable support 400, as well as a set of ribs 826 (e.g., substantially identical to similarly numbered features discussed relative to other examples), etc. However, the cable supports 400, 800 differ in some regards, including with regard to cup and gate configurations.

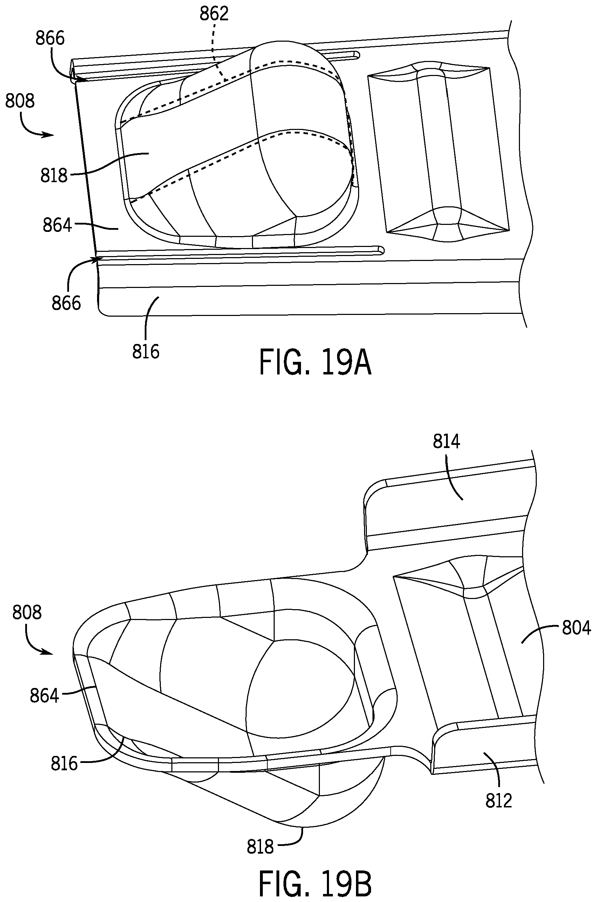

As best illustrated in FIGS. 16-18, the cable support 800 includes a base 802 and a mounting surface 850. The base 802 can include a hole 820 that is centrally located on a central axis 854 (e.g., rotational axis) that extends in a direction perpendicular to the mounting surface 850. The hole 820 has a conical profile 824 that extends into the interior of a cup 806 of the cable support 800 and decreases in diameter from a perspective moving into the cup 806, away from the mounting surface 850. The cup 806 can exhibit a conical shape and be installed in various configurations as detailed relative to previous examples. In particular, the cup 806 can be dimensioned to receive a fastener insert 876 during installation (e.g., a nail gun insert as shown in FIGS. 19-20 to allow the use of different types of nail guns). As will be further discussed below, the conical profile 824 can define a height that provides a clearance between a bottom end of the hole and an installed structure, so that a stem 878 of the fastener insert 876 does not protrude past the base 802 when installed. Further, the conical profile 824 can provide improved strength overall for the cable support 800 and allow more close nesting of multiple supports together, as also discussed below.

In the illustrated example, the mounting surface 850 can be co-planar with a mounting plane 852 that extends perpendicularly to a central (e.g., rotational) axis of the conical shape of the cup 806. The cable support 800 can include a support arm 804, and a support surface 810 of the support arm 804 can extend at an oblique angle relative to the mounting plane 852. Correspondingly, a central axis 854 can remain perpendicular to the mounting plane 852 when the cable support 800 is installed to a support structure (e.g., a ceiling). Relatedly, when adding a second cable support is desired, an orientation of the mounting surface 850 that is co-planar with the mounting plane 852 can ensure that the central axis 854 remains aligned with a corresponding axis of the second cable support. Therefore, the two cable supports can be rotationally offset relative to each other in any number of orientations without creating interference between the respective cup geometries.

In some examples, protrusions, recesses, or other indexing features can be provided to help users align stacked cable supports in particular relative orientations. Continuing relative to FIGS. 16-18, for example, the cup 806 includes a lateral (e.g., conical) surface 860 with ribs 826 that are spaced apart by a predetermined angle (e.g., by 90 degrees, as shown). The ribs 826 extend from the mounting surface 850 toward a lower end of the cup 806, relative to an installed orientation (see, e.g., FIG. 16). As further detailed below, the ribs 826 may guide indexing ribs of another cable support when installing two or more cable supports together, so that cable supports can be maintained more securely together at any relative rotational orientation. In some examples, the ribs 826 can be linearly-extending features (e.g., as shown). In other examples, other embossed patterns for the ribs 826 are possible, or other indexing protrusions or recesses can be similarly provided.

Additionally, the cable support 800 includes a gate portion 816 and a protrusion 818 provided at a distal end 808 of the cable support 800. The protrusion 818 defines a height 858 that can help to retain cables when the cables are inserted onto the support arm 804. For example, the height 858 may be greater a diameter of the cables or the protrusions 822. Additionally, the height 858 can provide a clearance between the protrusion 818 and a surface of a support structure along the mounting plane 852. Thus, the cables can be inserted over the protrusion 818 and retained on the support arm 804. Generally, in this regard, an insertion side of the protrusion 818 (e.g., near the distal end 808) can exhibit a smaller angle of departure from the support surface 810 than a retention side of the protrusion 818 (e.g., the right side in the orientation shown in FIG. 18).

In some implementations, the support arm 804 can be elastically deformable to aid in inserting the cables without unintentionally damaging the cables (e.g., scraping outer sheath of the cables). Thus, for example, the support arm 804 can be flexed relative to the cup 806 to increase a clearance between the protrusion 818 and the relevant support structure.

In some examples, the gate portion 816 can be deformable relative to the remainder of the support arm 804. For example, as illustrated in FIG. 19A, the support arm 804 can have slits 866 at the distal end 808 to form a cantilevered plate 864 that includes the protrusion 818. In some examples, this arrangement for the plate 864 can provide increased flexibility for inserting large cables over the protrusion 818 by allowing the plate 864 to deflect separately from the support arm 804. Alternatively or additionally, as shown with dotted lines in FIG. 19A, the protrusion 818 can be formed as a band 862 (e.g., a curved tab) that can be deformed separately from the support arm 804.

FIG. 19B illustrates yet another embodiment of the cantilevered plate 864 at the distal end 808 that includes the protrusion 818. A projected area of the cantilevered plate 864 is approximately similar to a projected area of the protrusion 818, providing sufficient material to support the protrusion 818. The cantilevered plate 864 extends from the support arm 804 beyond an end of the support flanges 812, 814. Correspondingly, the gate portion 816 can be readily deformed separately from the support flanges 812, 814. Alternate designs of the gate portion 816 with varying parameters (e.g., width, thickness) are also possible, including to preserve an overall strength of the support arm 804.

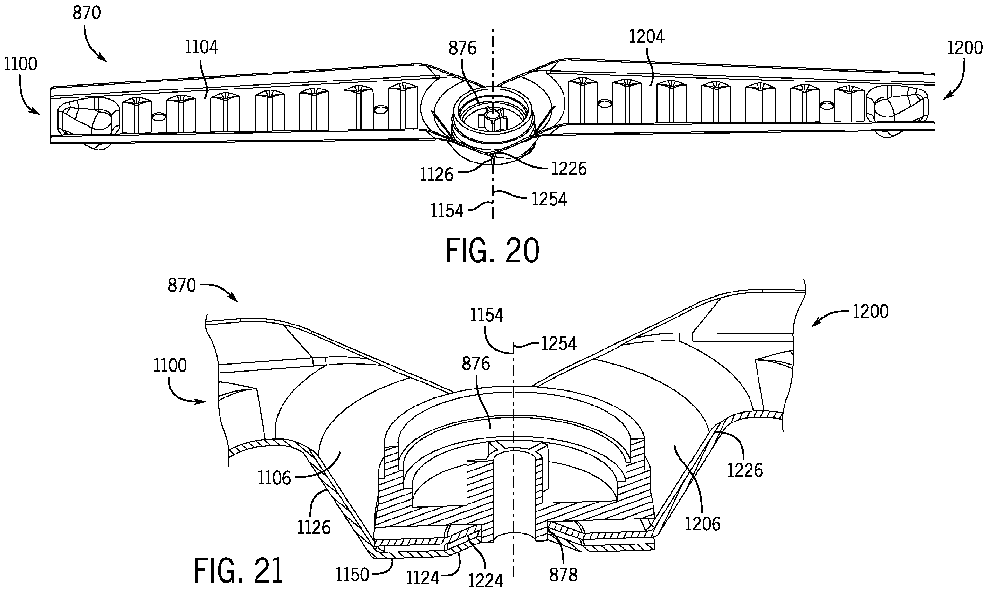

Continuing, FIGS 20 and 21 illustrate a cable support assembly 870 that includes a first cable support 1100 and a second cable support 1200. The first and second cable supports 1100, 1200 are each similar to the cable support 800 with like numerals generally referring to like features (e.g., substantially identical features, relative to corresponding features of the cable support 800). In the illustrated example, a first support arm 1104 and a second support arm 1204 extend in opposite directions. A second cup 1206 is nested within a first cup 1106, with a first conical profile 1124 of a base wall of the first cup 1106 and a second conical profile 1224 of a base wall of the second cup 1206 aligned (e.g., nested together or seated flush against one another), as shown in see FIG. 21.

In particular, the first and second conical profiles 1124, 1224 can extend axially by a distance so that when the fastener insert 876 is received in the second cup 1206, the stem 878 of the fastener insert 876 does not protrude past a mounting surface 1150 of the first cup 1106. Thus, the stem 878 can be kept from interfering with the seating of the first cup 1106 against the relevant support structure (not shown). Correspondingly, the cable support assembly 870 can be installed to a ceiling structure with a high degree of stability.

As noted above, in some cases, protrusions or recesses on the nested cups can be aligned to provide indexed alignment of the cups. In the illustrated example, as shown in FIG. 21 in particular, two opposing ribs 1126 of the first cable support 1100 can engage with two opposing ribs 1226 of the second cable support 1200 to help secure the first and second cable supports 1100, 1200 in the illustrated configuration. While the illustrated example provides a vertical indexed alignment of the first cup 1106 and the second cup 1206, some example protrusions or recesses can provide a horizontal or otherwise angled indexed alignment of cups. For example, the first cup 1106 and the second cup 1106 can include ribs that extend horizontally or at a non-zero angle.

In some examples, corresponding configurations of the conical profiles of the first and second cups 1106, 1206 can also help to provide a secure collective installation of the first and second cable supports 1100, 1200. For example, as generally noted above, the first and second cups 1106, 1206 can have aligned axes when nested, even while having respective heights that are asymmetrically distributed around the axes. For example, as shown in FIG. 21 in particular, a first axis 1154 extends centrally through the first conical profile 1124, and a second axis 1254 extends centrally through the second conical profile 1224. In an assembled configuration, the first and second axes 1154, 1254 can thus be co-axially aligned, as shown, to provide a close (e.g., flush) nesting of the first and second cups 1106, 1206 at any relative orientation of the first and second cable supports 1100, 1200.

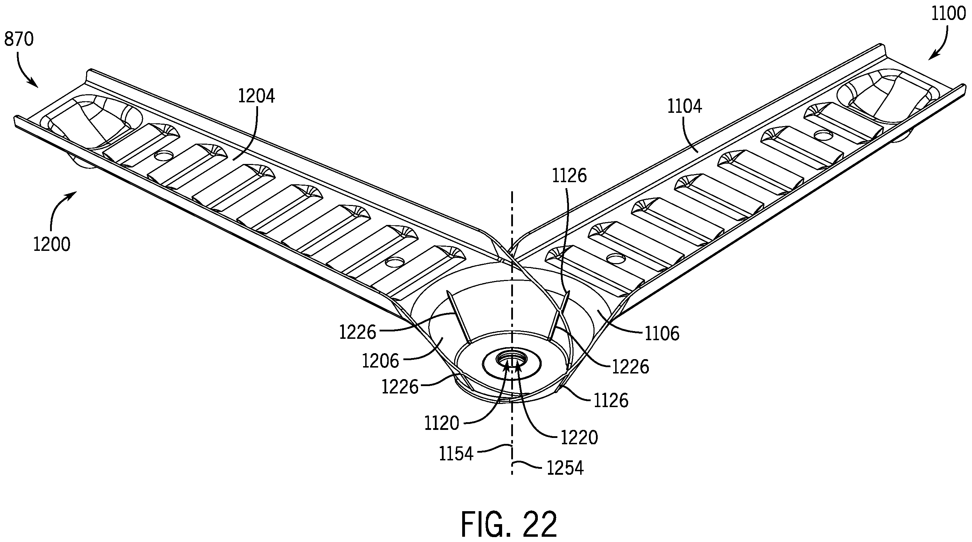

In some implementations, the first and second cable supports 1100, 1200 can be rotated to a different configuration, e.g., still with the first and second axes 1154, 1254 co-axially aligned. For example, FIG. 22 illustrates another configuration of the cable support assembly 870, with the first and second support arms 1104, 1204 extending in perpendicular directions. In this configuration, for example, two adj acent ribs 1126 of the first cable support 1100 can engage with two adjacent ribs 1226 of the second cable support 1200. When the adjacent ribs 1126, 1226 are aligned and the first and second cable supports 1100, 1200 mated, a fastener can be provided through first and second fastener apertures 1120, 1220 to secure the cable support assembly 870 to a support structure in the illustrated arrangement.

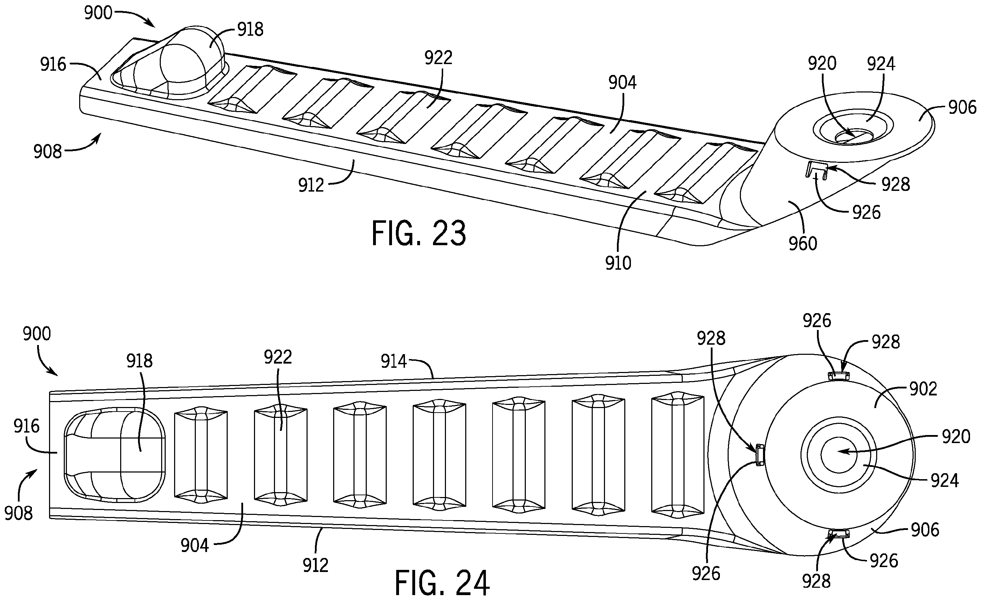

Turning now to FIGS. 23-29, a cable support 900 is shown. The cable support 900 is similar to the cable support 800 (e.g., with various substantially identical features, relative to corresponding features of the cable support 800), with like numerals referring to like features. For example, in addition to various features discussed below, the cable support 900 includes a cup 906 that defines conical profile with an axis 954, a base 902 with a mounting surface 950, a support arm 904 that extends at an angle relative to a mounting plane 952, a set of support flanges 912, 914 extending from a support surface 910, a gate protrusion 918 formed in a gate portion 916 of a distal end 908 of the support arm 904, various support protrusions 922, a conical profile 924 for nested mounting, a fastener aperture 920, etc. similar to the cable support 800.

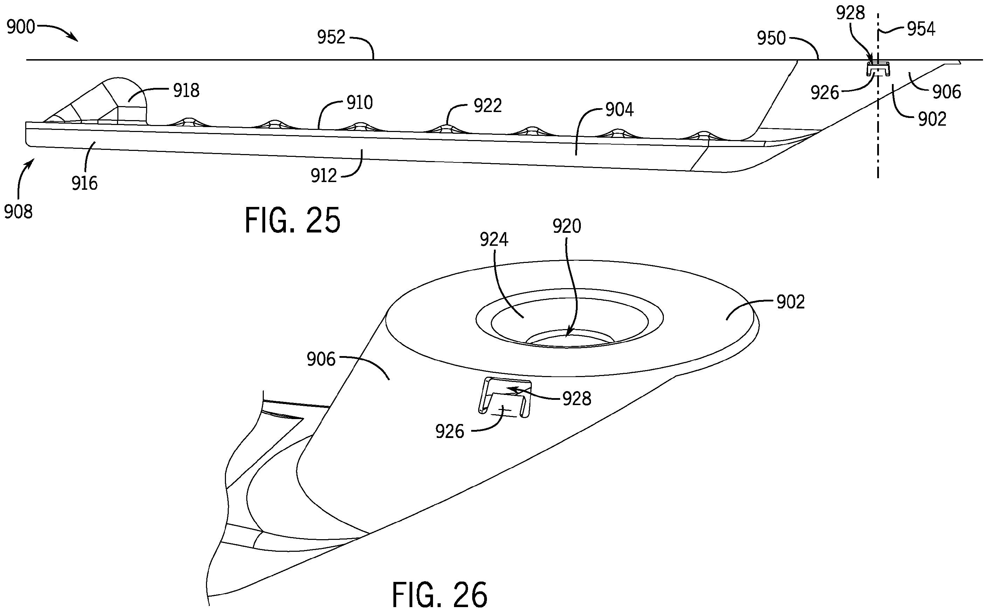

However, the cable supports 800, 900 differ in some respects, including with regard to indexing and securement features for nested multi-support configurations. For example, the cup 906 of the cable support has a lateral surface 960 with one or more tabs 926 formed within respective one of one or more windows 928. As illustrated in detail in FIG. 26, the tabs 926 extend at an angle toward the base end 902 of the cup 906. The tabs 926 can be formed integrally from the lateral surface 960 (e.g., by stamping, cutting, bending, etc.). In particular, the cable support 900 includes three tabs that are spaced apart by 90 degrees. In some configurations, the cable support 900 can include less or greater number of tabs, including one, two, four, five, six, etc. In some configurations, the tabs can be spaced apart by non-90-degree angle or non-uniformly spaced apart from one another.

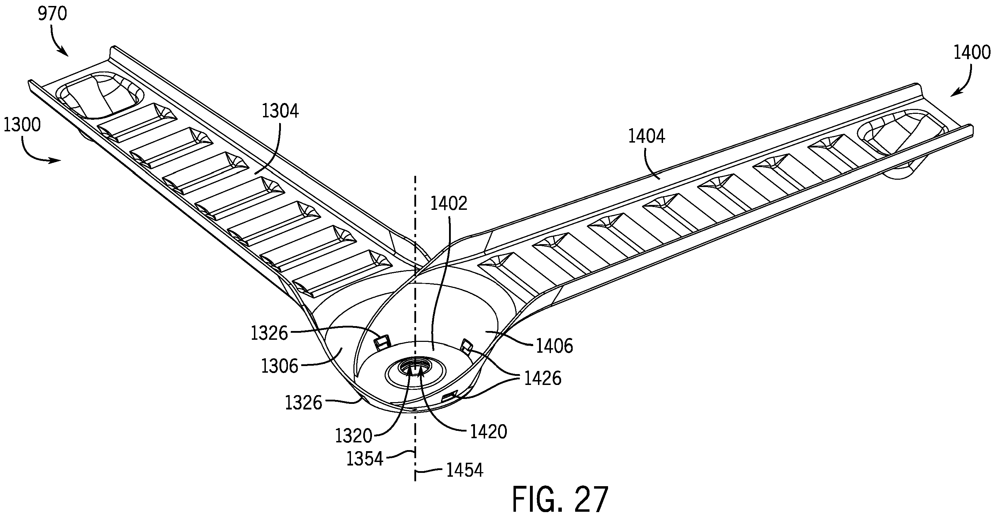

Specifically, FIGS. 27-29 illustrate an implementation of the tabs 926 in an assembled configuration. FIG. 27 shows a cable support assembly 970 with first and second cable supports 1300, 1400 arranged with first and second support arms 1304, 1404 that extend in perpendicular directions (e.g., with each of the first and second cable supports 1300, 1400 substantially identical to the cable support 900). A second cup 1406 is nested within a first cup 1306 with first and second axes 1354, 1454 aligned. In some configurations, a first conical profile 1324 of the first cup 1306 and a second conical profile 1424 of the second cup 1406 are substantially identical. Thus, the first cup 1306 and the second cup 1406 can be stacked with the first and second conical profiles 1324, 1424 following one another. When the first cup 1306 and the second cup 1406 are in a stacked configuration, a fastener can be received in first and second fastener apertures 1320, 1420 to secure the cable support assembly 970 to a support structure.

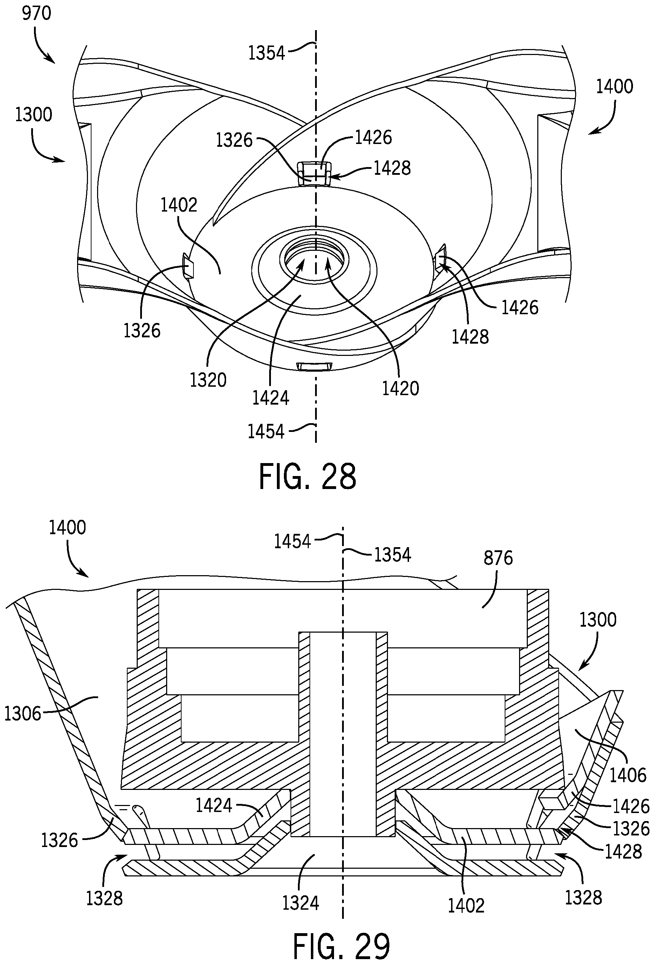

In this arrangement, to secure the first and second cups 1306, 1406 together, two adjacent tabs 1326 of the first cable support 1300, formed in respective windows 1328, can engage with two adj acent windows 1428 of the second cable support 1400. Further, another tab 1326 of the first cable support 1300 can engage with a base 1402 of the second cable support 1400. For example, one of the tabs 1326 can engage an edge of the second base 1402 at the shorter-height side of the second cup 1406, as shown in FIG. 29. This particular configuration can effectively secure the second cable support 1400 to the first cable support 1300 by providing multiple engagement points distributed around the first and second cups 1306, 1406, including along the base 1402 where the lateral wall height of the second cup 1406 is at a minimum (e.g., zero or a material thickness of the second cable support 1400).

In some examples, the first and second cable supports 1300, 1400 can be rotated about the first and second axes 1354, 1454 to different configurations, with the tabs 1326 still similarly securing the first and second cups 1306, 1406 together. As best illustrated in FIG. 28, for example, the first and second cable supports 1300, 1400 can extend in opposing directions, with two opposing tabs 1326 engaging with two opposing windows 1428 and another tab 1326 engaging the base 1402.

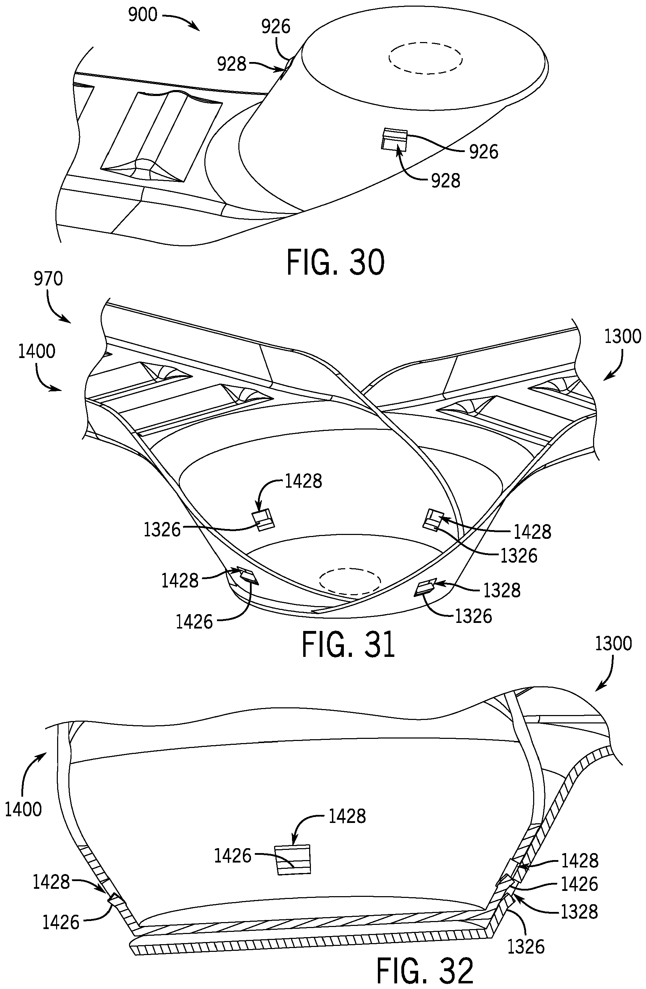

Tabs or other protrusions that are generally oriented as shown in FIG. 26 can be particularly beneficial, including to provide the multi-point engagement discussed above, in multiple relative rotational alignments of the relevant supports (e.g., the first and second cable supports 1300, 1400). However, in some examples, other configurations are possible. For example, as shown in FIG. 30, in an alternate configuration, the tabs 926 can extend at an angle toward an end of the cup 906 that is opposite the base end 902. Correspondingly, in another configuration of the cable support assembly 970, as shown in FIGS. 31 and 32, the tabs 1426 of the inner nested support 1400 can extend outwardly to engage the outer nested support 1300.

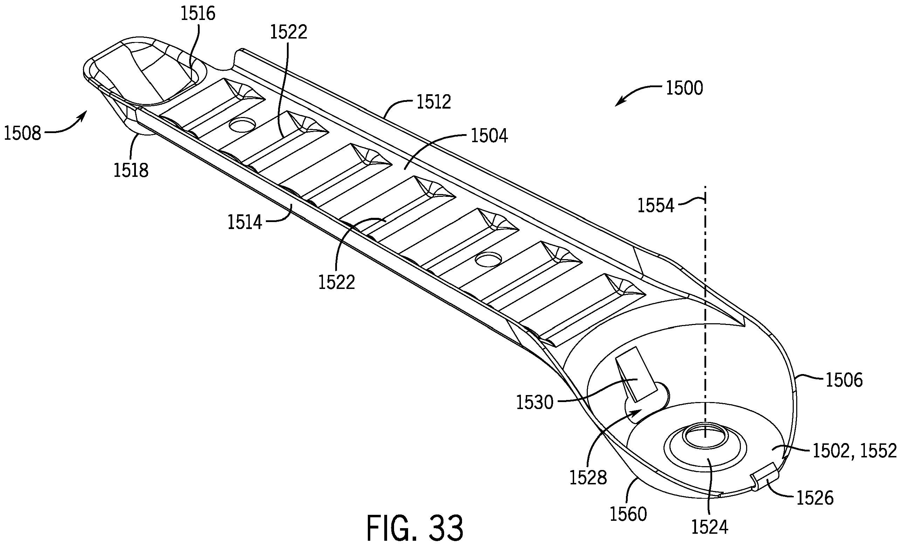

Turning now to FIG. 33, a cable support 1500 is shown. The cable support 1500 is similar to the cable support 900, with like numerals referring to like features. For example, in addition to various features discussed below, the cable support 1500 includes a cup 1506 that extends from a base 1502 around an axis 1554 to define a conical section for nested mounting, as well as an internal conical profile 1524 extending into the cup 1506 from a base wall thereof. The cable support 1500 also include a support arm 1504 that extends at an angle relative to a mounting plane 1552 along the base 1502, a set of support flanges 1512, 1514, and a gate protrusion 1518 formed in a gate portion 1516 of a distal end 1508 of the support arm 1504, various support protrusions 1522 along the support arm 1504, etc. similar to the cable support 900.

However, the cable supports 1500, 900 differ in some respects, including with regard to indexing and securement features for nested multi-support configurations. For example, a lateral surface 1560 of the cup 1506 of the cable support 1500 has a window 1528, and a tab 1526 extends from a side of the cup 1506 that is opposite the window 1528 (e.g., from the base 1502 of the cup 1506, opposite the support arm 1504, as shown). In particular, the tab 1526 can be an inwardly hooked tab, as illustrated, although other configurations are possible. In some examples, an additional tab 1530 can be formed within the window 1528. The tab(s) 1526 or 1530 can be formed integrally from the lateral surface 1560 (e.g., by stamping, cutting, bending, etc.). In the illustrated example, the window 1528 includes a generally ovular shape, although other types of shapes (e.g., rectangular, triangular, polygonal, circular, etc.) are possible. Further, the window 1528 can be beneficially formed in alignment with the tab 1530, as shown, or can be formed separately on the cup 1506. In some examples, the window 1528 need not be a through opening. For example, the window 1528 can include an indent, a blind hole, a slot, or other opening that can be arranged to engage with the tab 1526. Similarly, other known features to engage a hooked or other tab can be alternatively (or additionally) provided.

Further, the support flanges 1512, 1514 extend along a portion of the support arm 1504. For example, the support flanges 1512, 1514 extend to a part that the gate portion 1516 starts, such that the gate portion 1516 does not include the support flanges 1512, 1514. Accordingly, the gate portion 1516 can flex relative to one or more of the support arm 1504, the support flanges 1512, 1514, or the cup 1506.

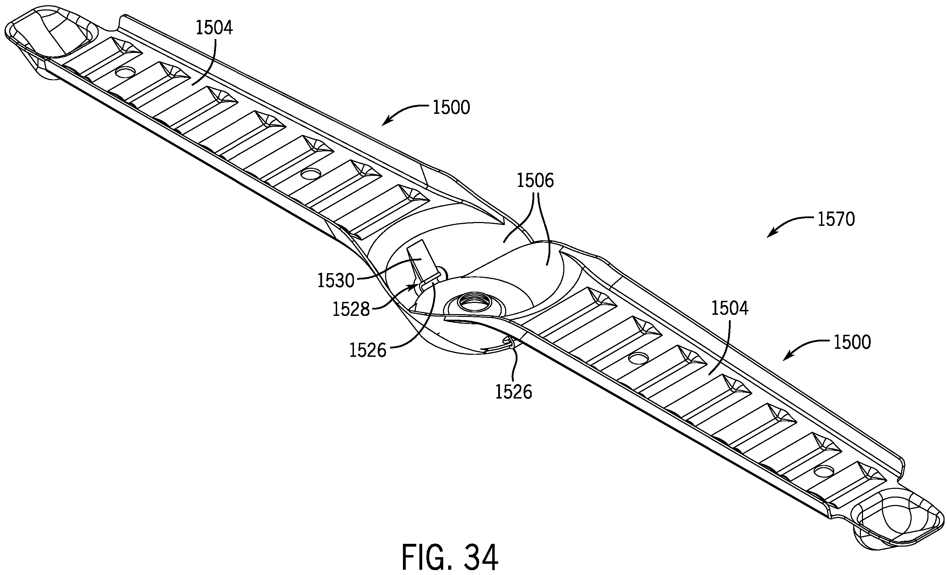

FIGS. 34-35B illustrate a cable support assembly 1570 with two instances of the cable support 1500 installed together in an assembled configuration. In particular, FIG. 34 shows the cups 1506 of the two cable supports 1500 nested together along a common axis for support together on a ceiling (e.g., with the cable support assembly 1570 inverted from the illustrated orientation), and with the support arms 1504 extending in opposite directions.

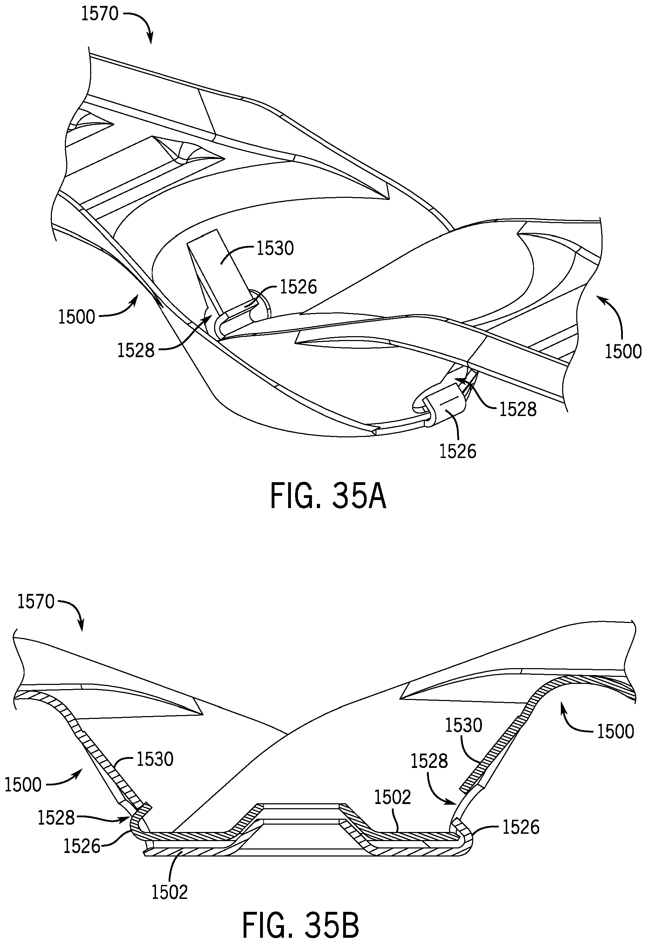

As shown in FIGS. 35A and 35B in particular, to secure the cups 1506 together, the hooked tab 1526 of the outer cup 1506 (e.g., the cup adjacent to a ceiling, as installed) can engage with the inner cup 1506 (e.g., the cup spaced apart from the ceiling, as installed) via the clearance provided by the window 1528 of the inner cup. For example, as shown, the hooked tab 1526 of the outer (lower, as shown) cup 1506 can protrude into the window 1528 of the inner (upper, as shown) cup 1506, to engage with material of the base wall of the inner cup 1506. Further, the hooked tab 1526 of the inner cup 1506 can engage with the tab 1530 (e.g., within the window 1528 of the outer cup 1506) to further secure the cups 1506 together. The hooked tabs 1526 and the material of the bases 1502 can engage one another sequentially or simultaneously. As with other approaches detailed above, this particular configuration can effectively secure the cable supports 1500 together by providing multiple engagement points distributed around the cups 1506, including along the base 1502 where the lateral wall height of the cup 1506 is at a minimum (e.g., zero). The combined assembly 1570 can then be collectively installed (e.g., by driving a single fastener through the bases 1502 of the cups 1506 into a ceiling structure).

In the illustrated example, the tab 1526 is arranged on an opposite side of the cup 1506 than the window 1528 and the tab 1530. Thus, the two cups 1506 can be secured together and the corresponding support arms 1504 can extend in opposite directions. However, in other configurations, one or more of the tabs 1526, the windows 1528, and the tabs 1530 (or additional such features) can be arranged on different sides of the respective lateral surfaces 1560 to provide differently angled configurations for the cable supports 1500.

In other examples, other configurations are possible. For example different hooked (or other) geometry can be employed for the tabs 1526, or the tabs 1530 may be otherwise formed or may be excluded (e.g., so that the inner hooked tab 1526 engages with a side wall of the window 1528). Similarly, the tabs 1526 may be configured to engage other parts of the corresponding cup 1506, or the tabs 1526, 1530 or the windows 1528 can be differently spaced around the relevant cup 1506. In some cases, a width of the window 1528 is greater than a width of the tab 1526, such that when the tab 1526 is inserted into a corresponding window 1528, an engagement of the tab 1526 and the window 1528 can provide a relatively loose fit (e.g., for easier and more flexible installation).

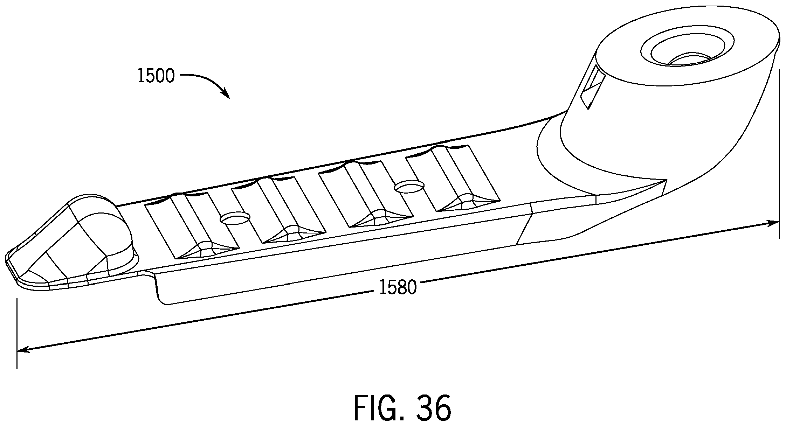

In some examples, different lengths, widths, or heights of one or more components of the cable support 1500 or the cable support assembly 1570 are possible. For example, a longitudinal length 1580 of the cable support 1500 can be adjusted. As shown in FIG 36, the longitudinal length 1580 can be reduced to accommodate a smaller number of cables (e.g., 5-cable capacity) or fit in a different size of space. In other examples, the longitudinal length 1580 can be increased to increase a cable capacity.

Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

As used herein, unless otherwise limited or defined, "integral" and derivatives thereof (e.g., "integrally") describe elements that are manufactured as a single piece without fasteners, adhesive, or the like to secure separate components together. For example, an element stamped, cast, or otherwise molded as a single-piece component from a single piece of sheet metal or using a single mold, without rivets, screws, or adhesive to hold separately formed pieces together is an integral (and integrally formed) element. In contrast, an element formed from multiple pieces that are separately formed initially then later connected together, is not an integral (or integrally formed) element.

Unless otherwise specified or limited, the terms "about" and "approximately," as used herein with respect to a reference value, refer to variations from the reference value of ± 20% or less (e.g., ± 15, ± 10%, ± 5%, etc.), inclusive of the endpoints of the range. Similarly, as used herein with respect to a reference value, the term "substantially equal" (and the like) refers to variations from the reference value of less than ± 5% (e.g., ± 2%, ± 1%, ± 0.5%) inclusive. Where specified in particular, "substantially" can indicate a variation in one numerical direction relative to a reference value. For example, the term "substantially less" than a reference value (and the like) indicates a value that is reduced from the reference value by 30% or more (e.g., 35%, 40%, 50%, 65%, 80%), and the term "substantially more" than a reference value (and the like) indicates a value that is increased from the reference value by 30% or more (e.g., 35%, 40%, 50%, 65%, 80%).

As used herein, unless otherwise limited or defined, "substantially identical" refers to two or more components or systems that are manufactured according to the same process and specification, with variation between the components or systems that are within the limitations of acceptable tolerances for the relevant process or specification. For example, two components can be considered to be substantially identical if the components are manufactured according to the same standardized manufacturing steps, with the same materials, and within the same acceptable dimensional tolerances (e.g., as specified for a particular process or product).

Also as used herein, unless otherwise limited or defined, "or" indicates a non-exclusive list of components or operations that can be present in any variety of combinations, rather than an exclusive list of components that can be present only as alternatives to each other. For example, a list of "A, B, or C" indicates options of: A; B; C; A and B; A and C; B and C; and A, B, and C. Correspondingly, the term "or" as used herein is intended to indicate exclusive alternatives only when preceded by terms of exclusivity, such as "only one of," or "exactly one of." For example, a list of "only one of A, B, or C" indicates options of: A, but not B and C; B, but not A and C; and C, but not A and B. In contrast, a list preceded by "one or more" (and variations thereon) and including "or" to separate listed elements indicates options of one or more of any or all of the listed elements. For example, the phrases "one or more of A, B, or C" and "at least one of A, B, or C" indicate options of: one or more A; one or more B; one or more C; one or more A and one or more B; one or more B and one or more C; one or more A and one or more C; and one or more A, one or more B, and one or more C. Similarly, a list preceded by "a plurality of" (and variations thereon) and including "or" to separate listed elements indicates options of one or more of each of multiple of the listed elements. For example, the phrases "a plurality of A, B, or C" and "two or more of A, B, or C" indicate options of: one or more A and one or more B; one or more B and one or more C; one or more A and one or more C; and one or more A, one or more B, and one or more C.

In some implementations, devices or systems disclosed herein can be utilized, manufactured, installed, etc. using methods embodying aspects of the disclosed technology. Correspondingly, unless otherwise indicated, any description herein of particular features, capabilities, or intended purposes of a device or system should be considered to disclose, as examples of the disclosed technology a method of using such devices for the intended purposes, a method of otherwise implementing such capabilities, a method of manufacturing relevant components of such a device or system (or the device or system as a whole), and a method of installing disclosed (or otherwise known) components to support such purposes or capabilities. Similarly, unless otherwise indicated, discussion herein of any method of manufacturing or using for a particular device or system, including installing the device or system, should be understood to disclose, as examples of the disclosed technology, the utilized features and implemented capabilities of such device or system.

Some methods of the disclosed technology may be presented above or below with operations listed in a particular order. Unless otherwise required or specified, the operations of such methods can be implemented in different orders, in parallel, or as selected sub-sets of one or more individual operations (e.g., with a particular listed operation being implemented alone, rather than in combination with others).

Features which are described in the context of separate embodiments may also be provided in combination in a single embodiment. Conversely, various features which are, for brevity, described in the context of a single embodiment, may also be provided separately or in any suitable sub-combination. The applicant hereby gives notice that new claims may be formulated to such features and/or combinations of such features during the prosecution of the present application or of any further application derived therefrom. Features of the cable support, cable support assembly, and/or method described may be incorporated into/used with each other.

The previous description of the disclosed embodiments is provided to enable any person skilled in the art to make or use the invention. Various modifications to these embodiments will be readily apparent to those skilled in the art, and the generic principles defined herein may be applied to other embodiments without departing from the spirit or scope of the invention. Thus, the invention is not intended to be limited to the embodiments shown herein but is to be accorded the widest scope consistent with the principles and novel features disclosed herein.

## Claims

1. A cable support (1500) comprising:
a base (1502) including a cup (1506), the base (1502) being configured to receive a fastener within the cup (1506) to secure the cable support to a building structure in an installed orientation with the cup (1506) opening away from the building structure; and
a support arm (1504) extending integrally from the cup (1502) to a distal end (1508) that is cantilevered from the cup (1506), the support arm (1504) including a support surface, facing toward the building structure in the installed orientation, to support cables (660) relative to the base (1502).

2. The cable support (1500) of claim 1, further comprising:
a protrusion (1518) extending integrally from the distal end (1508) of the support arm (1504) to block removal of cables (660) from the support surface of the support arm (1504).

3. The cable support (1500) of either of claims 1 or 2, wherein the cup (1506) tapers between a first width at an upper end and a second width at a lower end, relative to the installed orientation, the first width being smaller than the second width, and optionally or preferably wherein the support arm (1504) extends integrally from the lower end of the cup.

4. The cable support (1500) of any of the preceding claims, wherein the cup (1506) defines a conical section.

5. The cable support (1500) of claim 4, wherein the support arm (1504) defines a support surface that extends obliquely relative to a reference plane (1552) that is perpendicular to a central axis (1554) of the conical section.

6. The cable support (1500) of any of the preceding claims, wherein a height of the cup (1506) at a first side adjacent to the support arm (1504) is larger than a height of the cup (1506) at a second side opposite the support arm (1504), and optionally or preferably wherein the support arm (1504) extends integrally from the cup (1506) at the first side.

7. The cable support (1500) of any of the preceding claims, wherein the support surface of the support arm (1504) includes a plurality of protrusions (1522) arranged to space apart adjacent cables supported on the support surface, and optionally or preferably wherein the heights of the plurality of protrusions (1522) above the support surface decrease, relative to a perspective moving from the cup (1506) to the distal end (1508) of the support arm (1504).

8. The cable support (1500) of any of the preceding claims, wherein the cup (1506) includes a first tab (1530) at a first side of the cup and a second tab (1527) at a second side of the cup, to secure another cup of another cable support in nested engagement with the cup (1506), the second tab (1527) optionally or preferably extending from a base wall of the cup (1506).

9. The cable support (1500) of any of the preceding claims, wherein a base wall of the base (1502) includes a conical profile (1524) that extends into the cup (1506) and includes an aperture to receive the fastener, the conical profile (1524) being nestable with another conical profile of another cup of another cable support that is in nested engagement with the cup (1506) and also secured to the building structure by the fastener.

10. A cable support assembly (1570) comprising:
a first cable support (1500) according to any of claims 1 through 9, including the base (1502) as a first base, the support arm (1504) as a first support arm, and the cup (1506) as a first cup; and
a second cable support (1500) according to any of claims 1 through 9, including the base (1502) as a second base, the support arm (1504) as a second support arm, and the cup (1506) as a second cup;
the first and second cable supports being secured to a building structure with the second cup nested within the first cup and the first and second support arms extending in different directions to support cables relative to the building structure.

11. The cable support assembly (1570) of claim 10, wherein the first and second cable supports are secured to the building structure with a single fastener extending through the first base and the second base.

12. The cable support assembly (1570) of either of claims 10 or 11, wherein tabs protrude from one or more of the first cup or the second cup to engage the other of the first cup or the second cup to secure the second cup within the first cup.

13. The cable support assembly (1570) of claim 12, wherein one or more of:
the first cable support includes an angled tab (1530) that extends from a first side of the first base to secure the second cup within the first cup, the angled tab (1530) optionally or preferably extending from a side wall of the first cup (1506) to be aligned to engage a tab of the second cup; or
the first cable support includes a hooked tab (1526) that extends from a second side of the first base to secure the second cup within the first cup, the hooked tab (1526) optionally or preferably extending from a base wall of the cup (1506) to be aligned to engage a base wall of the second cup.

14. A method of securing cables (660) to a building structure, the method comprising:
aligning a first base (1502) of a first cable support (1500) with the building structure, with a first cup (1506) of the first base (1502) extending to open away from the building structure;
extending a fastener through the first base (1502), within the first cup (1506), to secure the first cable support (1500) to the building structure with a first support arm (1504) extending integrally from the first cup (1506) along the building structure; and
with the first cup (1506) secured to the building structure, inserting a first set of the cables between the building structure and the first support arm (1504) to be supported on a first support surface of the first support arm (1504).

15. The method of claim 14, further comprising:
before extending the fastener through the first base (1502), nesting a second cup (1506) of a second cable support (1500) within the first cup (1506) to secure the second cup to the first cup for collective attachment to the building structure; and
with the first and second cable supports (1500) secured to the building structure by the fastener, inserting a second set of the cables between the building structure and a second support arm (1504) that extends integrally from the second cup, so that the second set of the cables are supported on a second support surface of the second support arm (1504).
